Europäisches Patentamt

(19) European Patent Office   (11) Numéro de publication : **0 110 213**

Office européen des brevets   **B1**

(12)   **FASCICULE DE BREVET EUROPÉEN**

(45) Date de publication du fascicule du brevet :   (51) Int. Cl.⁴ : **G 01 M   1/30**
21.01.87

(21) Numéro de dépôt : **83111228.9**

(22) Date de dépôt : **10.11.83**

(54) Dispositif pour l'application de balourds sur un rotor.

(30) Priorité : **16.11.82 FR 8219122**

(43) Date de publication de la demande :
**13.06.84 Bulletin 84/24**

(45) Mention de la délivrance du brevet :
**21.01.87 Bulletin 87/04**

(84) Etats contractants désignés :
**AT BE CH DE FR GB IT LI LU NL SE**

(56) Documents cités :
**DE-A- 3 102 726**

(73) Titulaire : **ALSTHOM**
**38, avenue Kléber**
**F-75784 Paris Cédex 16 (FR)**

(72) Inventeur : **Bigret, Roland**
**22, rue Jean Varnet**
**F-93700 Drancy (FR)**

(74) Mandataire : **Weinmiller, Jürgen et al**
**Lennéstrasse 9**
**D-8133 Feldafing (DE)**

Jouve, 18, rue St-Denis, 75001 Paris, France

## Description

La présente invention a trait à un dispositif pour l'application de balourds sur un rotor.

On sait que pour réaliser l'équilibrage des rotors par la méthode des coefficients d'influence on doit ajouter des balourds sur le rotor afin de procéder à des mesures sans les balourds et avec les balourds.

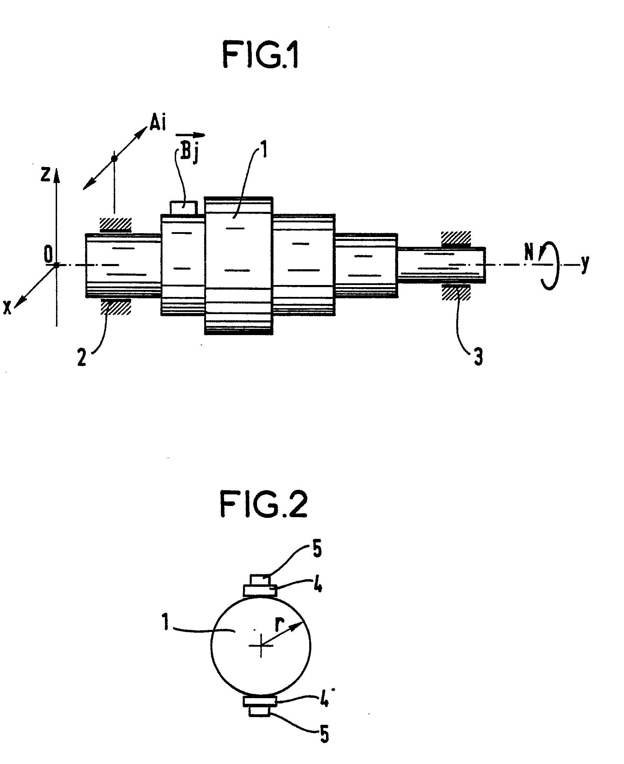

Or pour ajouter ces balourds, il est nécessaire d'arrêter le rotor, si bien que les mesures effectuées sans balourds et avec balourds sont espacées de plusieurs heures voire de plusieurs jours et qu'en raison d'une part de l'écart de temps et d'autre part du fait que le rotor a été arrêté, le coefficient d'influence déduit des mesures risque d'être différent du coefficient d'influence vrai (voir figure 1).

Il existe un dispositif connu du document DE-A 3102726 permettant d'appliquer un balourd au rotor sans arrêter ce dernier ledit dispositif comportant, d'une part, plusieurs capacités montées symétriquement autour du rotor, lesdites capacités, destinées à être remplies d'un fluide étant pourvues d'une ouverture, et, d'autre part, des dispositifs d'ouverture associés aux capacités, chaque dispositif étant télécommandable par fil pour dégager l'ouverture de la capacité associée, afin que le fluide contenu puisse être évacué.

Dans le dispositif connu, les dispositifs d'ouvertures sont commandés par des fils enroulés sur le rotor, ce qui présente de grandes difficultés de réalisations dues à la force centrifuge et au milieu ambiant (vapeur d'eau, eau ...) et qui conduit à des résultats peu fiables dans la transmission des ordres. De plus il est très difficile lorsque le rotor n'est pas percé de relier ces fils à l'extérieur par l'intermédiaire d'un contacteur tournant.

Le dispositif selon l'invention permettant d'éviter ces inconvénients est caractérisé en ce que le dispositif d'ouverture comporte, d'une part, une vanne pyrotechnique dont le piston solidaire d'un équipage passe d'une première position, dans laquelle l'équipage bloque l'ouverture de la capacité associée, à une seconde position dans laquelle l'équipage débloque l'ouverture lorsque l'explosif de la vanne est mis à feu et, d'autre part, un circuit de commande comprenant un récepteur se déclenchant lorsqu'il reçoit un signal émis par une source fixe et transmis sans support matériel, le déclenchement du détecteur entraînant la mise à feu de l'explosif.

Selon une réalisation particulièrement simple de l'invention le détecteur est un photothyristor et la source fixe une source émettant un rayonnement lumineux.

L'invention va maintenant être décrite plus en détail en se référant à un mode de réalisation particulier cité à titre d'exemple et représenté par les dessins annexés.

La figure 1 représente schématiquement un rotor de turbine sur lequel on peut disposer des balourds.

La figure 2 représente une coupe du rotor selon la figure 1 muni de deux balourds.

Les figures 3 et 4 montrent en échelle agrandi un balourd sous forme d'une capacité avec son dispositif d'ouverture associé en position fermée et ouverte respectivement.

La figure 5 représente un circuit de commande du dispositif d'ouverture représenté aux figures 3 et 4.

Sur la figure 1, pour illustrer la méthode de mesure des coefficients d'influence, on a représenté un rotor 1 d'axe horizontal Oy repéré par rapport à un trièdre trirectangle Oxyz et monté sur deux paliers 2 et 3. Le comportement vibratoire du rotor est repéré par exemple par la vibration Ai du palier 2 dans la direction Ox.

On désigne par $\vec{\mathscr{C}}_0$ le torseur des balourds initiaux à compenser, à la vitesse de rotation N.

A l'instant to, ce torseur engendre la vibration $\overrightarrow{Aio}$.

La phase de cette vibration dont la fréquence fondamentale est égale à la vitesse de rotation est définie par rapport à la composante fondamentale d'un signal périodique élaboré par un capteur fixe qui relève le passage d'un repère fixé sur le rotor.

Dans le plan d'équilibrage Pj perpendiculaire à Oy on ajoute un balourd $\overrightarrow{Bj}$ (masse mj à la distance Rj de l'axe Oy du rotor 1 en une position angulaire θj par rapport à un repère solidaire du rotor, Bj = mj Rj).

A l'instant t'o postérieur à to, le torseur $\vec{\mathscr{C}}'o + \overrightarrow{Bj}$ engendre la vibration $\overrightarrow{Ai}$.

Si to et t'o sont très voisins, le coefficient d'influence du plan d'équilibrage Pj sur la vibration Ai est défini par :

$$Cij = \frac{\overrightarrow{Ai} - \overrightarrow{Aio}}{\overrightarrow{Bj}} \qquad (1)$$

En raison de l'écart entre to et t'o et de plus du fait que le rotor doit être arrêté pour disposer le balourd $\overrightarrow{Bj}$, $\mathscr{C}$o et $\mathscr{C}$'o peuvent être différents si bien que le coefficient d'influence calculé par application de la formule (1) peut être différent du coefficient d'influence vrai.

La figure 2 représente le dispositif selon l'invention. Ce dispositif comporte deux capacités identiques 4 fixées sur le rotor en des points diamétralement opposés.

Un dispositif d'ouverture selon l'invention 5 est fixé sur chacune des capacités 4.

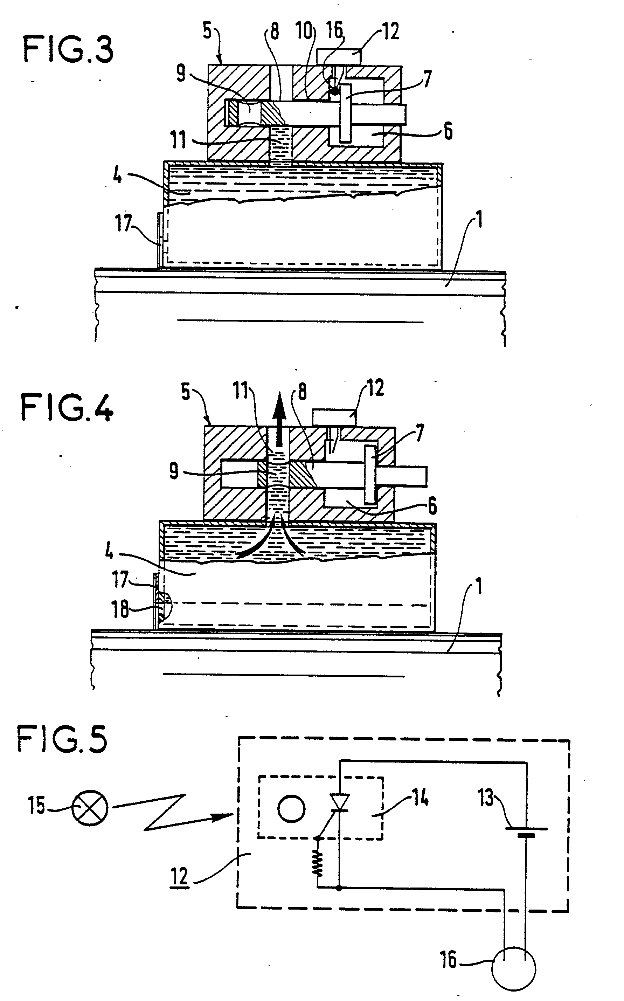

Le détail du dispositif 5 est représenté aux figures 3 et 4.

Le dispositif d'ouverture 5 est monté sur la capacité 4 et comporte une vanne pyrotechnique 6 dont le piston 7 coulisse parallèlement à l'axe du rotor et peut prendre une première position (figure 3) ou une seconde position (figure 4).

Un équipage 8 solidaire du piston 7 muni d'un orifice 9 coulisse dans un logement 10 situé de part et d'autre de l'ouverture 11 de la capacité 4.

Dans la première position du piston, l'équipage 8 vient bloquer l'ouverture 11 (figure 3) et, dans la seconde position, l'orifice 9 vient en regard de l'ouverture 11.

Le dispositif 5 comporte également un circuit de commande 12 servant à la mise à feu de l'explosif 16 disposé sous le piston 7 dans sa première position.

Le circuit 12 (figure 5) comporte une pile 13, un photothyristor 14. Lorsque le photothyristor 14 reçoit le rayonnement d'une source lumineuse 15, il se déclenche et le courant issu de la pile met à feu l'explosif 16.

Les deux capacités sont remplies d'eau ou d'un autre fluide adéquat (par exemple de l'huile) de masse m.

Lorsqu'on envoie un faisceau lumineux sur le photothyristor d'un dispositif d'ouverture 5, l'ouverture de la capacité associée est débloquée et l'eau s'évacue sous l'effet de la force centrifuge.

Les photothyristors des dispositifs d'ouverture seront décalés axialement ou radialement et associés chacun à une source lumineuse de façon à pouvoir les déclencher dans l'ordre voulu.

Pour permettre l'évacuation rapide de l'eau, chaque capacité 4 est munie d'un petit clapet latéral 17 fermé lorsque le rotor ne tourne pas et qui s'ouvre sous l'effet des forces centrifuges découvrant un orifice 18.

Le balourd instantané appliqué au rotor est égal à mr, r étant le rayon du rotor 1 au droit des capacités 4.

Pour une turbine à vapeur de grande puissance avec r = 0,5 m, on peut prendre m = 0,8 kg par exemple.

En évacuant le fluide de la première capacité puis le fluide de la seconde, deux balourds peuvent être appliqués pour confirmer les résultats.

Le délai entre le début de l'évacuation de l'eau et l'instant de la mesure de la vibration peut être voisin de 10 sec ; ce délai court permet de réaliser $\vec{c}'o' = \vec{c}c$.

Bien entendu on pourrait remplacer le photothyristor par tout système de télécommande sans fil (système télémétrique en modulation de fréquence, transformateur tournant etc..).

## Revendications

1. Dispositif permettant d'appliquer les balourds sur un rotor (1), comportant, d'une part, plusieurs capacités (4) montées symétriquement autour du rotor (1), lesdites capacités destinées à être remplies d'un fluide étant pourvues d'une ouverture (11), et d'autre part, des dispositifs d'ouverture (5) associés aux capacités (4), chaque dispositif (5) étant télécommandable pour dégager l'ouverture (11) de la capacité associée (4), afin que le fluide contenu puisse être évacué, caractérisé en ce que le dispositif d'ouverture (5) comporte, d'une part, une vanne pyrotechnique (6) dont le piston (7) solidaire d'un équipage (8) passe d'une première position dans laquelle l'équipage (8) bloque l'ouverture (11) de la capacité associée (4), à une seconde position dans laquelle l'équipage (8) débloque l'ouverture (11) lorsque l'explosif de la vanne est mis à feu et, d'autre part, un circuit de commande (12) comprenant un récepteur (14) se déclenchant lorqu'il reçoit un signal émis par une source fixe (15) et transmis sans support matériel, le déclenchement du récepteur (14) entraînant la mise à feu de l'explosif.

2. Dispositif selon la revendication 1, caractérisé en ce que le récepteur (14) est un photothyristor (14) et la source fixe (15) une source émettant un rayonnement lumineux.

## Claims

1. A device for applying weights to a rotor (1) comprising a plurality of chambers (4) disposed symmetrically around the rotor (1), these chambers being adapted to be filled with a fluid and being provided with an opening (11), and comprising shutter devices (5) associated to the chambers (4) and operable under remote-control so as to open the opening (11) of the associated chamber (4), so that fluid contained therein may be evacuated therefrom, characterized in that the shutter device (5) comprises on the one hand a pyrotechnic valve (6), the piston (7) of which is rigidly attached to a shutter rod (8) and passes from a first position, in which the rod (8) closes the opening (11) of the associated chamber (4), to a second position, in which the rod (8) opens the opening (11) in response to firing of the explosive material of the valve, and that the shutter device (5) comprises on the other hand a control circuit (12) incorporating a receiver (14) responsive to the reception of a signal generated by a fixed source and transmitted without a material transmission support, the activation of the receiver (14) causing the explosive to get fired.

2. A device according to claim 1, characterized in that the receiver (14) is a photothyristor and that the fixed source (15) is a light radiation source.

## Patentansprüche

1. Vorrichtung zum Anbringen von Wuchtgewichten auf einem Rotor (1), mit mehreren Fluidkammern (4), die symmetrisch um den Rotor (1) herum angeordnet und mit einer Öffnung (11) versehen sind, und mit den Kammern (4) zugeordneten Verschlußvorrichtungen (5), die je fernsteuerbar sind, um den Verschluß (11) der zugeordneten Kammer zu öffnen, damit das in ihr enthaltene Fluid austreten kann, dadurch gekennzeichnet, daß die Verschlußvorrichtung (5) einerseits ein pyrotechnisch auslösbares Ventil (6) besitzt, dessen mit einem Verschlußorgan (8) fest verbundener Kolben (7) von einer ersten Stellung, in der das Verschlußorgan (8) die Öffnung (11) der zugeordneten Kammer (4) blockiert, in eine zweite Stellung gelangt, in der das Verschlußorgan (8) die Öffnung (11) freigibt, wenn der Explosivstoff des Ventils gezündet wird, und andererseits einen Steuerkreis (12) mit einem Empfänger (14) enthält, der aufgrund eines von einer festen Quelle (15) ausgesandten und ohne materiellen Träger übertragenen Signals anspricht, wobei das Ansprechen des Empfängers (14) zum Zünden des Explosivstoffs führt.

2. Vorrichtung nach Anspruch 1, dadurch gekennzeichnet, daß der Empfänger (14) ein Photothyristor ist und die feste Quelle (15) eine eine Lichtstrahlung aussendende Quelle ist.

# FIG.1

# FIG.2

FIG.3

FIG.4

FIG.5